# EUROPEAN PATENT APPLICATION

(11) **EP 0 718 618 A2**
(43) Date of publication of application: **26.06.1996**
(21) Application number: 95114870.9
(22) Date of filing: 21.09.1995
(51) Int. Cl.: G01N 15/14, B01D 36/00

(54) **Apparatus and method for sorting and separating particles**

(30) Priority: 30.09.1994 US 316742
(71) Applicant: Becton Dickinson and Company, Franklin Lakes, New Jersey 07417-1880 (US)
(72) Inventor: Damen, Dirk P.L., B-2470 Retie (BE); Boschman, Gerardus A., B-9200 Baasrode-Dendermonde (BE)
(74) Representative: Selting, Günther, Dipl.-Ing.

(57) **Abstract**

The system includes an apparatus and a method for sorting desired objects and separating the objects, such as cells, particles and the like, from at least a portion of the fluid in which they are suspended. The apparatus includes a source of fluid with the objects suspended therein, a collection member for filtering or otherwise collecting at least a portion of the objects, and a pump for creating a pressure difference within the collection member so that the fluid containing objects is force through a filter membrane. The method of separating or collecting such objects includes providing the fluid with the objects suspended therein, feeding the fluid through the concentrator assembly, and separating or otherwise collecting at least a portion of objects from the fluid. In this way, the apparatus and method of the present system are suitable for use to separate and/or collect objects such as cells, particles and the like for concentration and/or separation with an acceptable degree of recoverability and viability.

## Description

### FIELD OF THE INVENTION

The present invention generally relates to a system for separating one material from another, and more specifically relates to an apparatus and method for separating cells, particles or like objects from at least a portion of a fluid in which such objects are suspended, with the objects having been previously sorted or otherwise separated by a flow cytometer. In this way, the apparatus and method may be used, for example, to concentrate or otherwise collect the objects.

### BACKGROUND OF THE INVENTION

Flow cytometry, the measurement and/or separation of objects such as cells and other particles in a moving liquid stream, is well established as a valuable analysis tool in research and clinical laboratories. A discussion of the various principles, techniques and apparatus behind flow cytometry is set forth in an article by John L. Haynes, entitled "Principles of Flow Cytometry", Cytometry Supplement 3:7-17 (1988), the disclosure of which is hereby incorporated by reference.

Conventional flow cytometry devices for sorting objects such as cells and particles with specific characteristics basically consist of a liquid stream forming a sheath to focus the objects as they pass through an orifice associated with the analyzing or counting capabilities of the device. Usually, the objects can be sorted at high speeds to collect tens of thousand of the objects based on a variety of chemical and physical characteristics such as size, granulation of the cytoplasm and presentation of specific antigens. Accordingly, there has been considerable interest in flow cytometry to sort objects for subsequent analysis.

In one type of sorting cytometer, after detecting the desired characteristic with an optical electronic system, the stream containing the individual objects is electrically charged shortly before being broken into droplets containing individual objects. An electrostatic field then diverts the flow of object-containing droplets into two or more streams depending on the polarity and charge of the droplets, and the divided streams are collected in separate containers as disclosed, for example, in U.S. Patent No. 4,230,558 (Fulwyler), the disclosure of which is hereby incorporated in its entirety by reference.

In another type of sorting cytometer, the portion of the stream containing the desired objects may be collected by moving a catcher tube in the focused liquid stream at an appropriate time for intermittently receiving selected objects as described, for example, in U.S. Patent No. 5,030,002 (North, Jr.), the disclosure of which is hereby incorporated in its entirety by reference. The catcher tube sorter does not rely on deflection of the objects for sorting and therefore has the advantages of avoiding pressure pulses, minimizing damage to cells and reducing or eliminating biologically hazardous aerosols. In addition, this sorter is configured so that the catcher tube sits continuously in the edge of the fluid stream but is not aligned with the portion of the stream which contains objects until it is moved into the center of the stream to collect the desired object, i.e., cell, particle or the like. The catcher tube sorter therefore collects a relatively larger volume of fluid, i.e., relative to the amount of objects sorted, than does either the droplet type sorter or the fluidics type switching sorter, with the result that more rare the collected object, the more dilute the resulting object suspension.

Accordingly, several disadvantages and limitations have been encountered in connection with the subsequent analysis of such objects sorted by these devices as a result of the selected objects being suspended in a large volume of sheathing liquid. In an effort to minimize these disadvantages and limitations, several techniques have been proposed and utilized to concentrate or otherwise separate the objects from the larger volume of sheathing fluid. Such attempts have included subsequent concentration by filtration, centrifugation, as described in U.S. Patent Nos. 4,244,513 (Foyer et al.), 3,850,369 (Bull et al.) and 3,824,841 (Bull), and high-gradient magnetic separation ("HGMS"), as described in U.S. Patent Nos. 4,665,595 (Graham) and 4,664,796 (Graham et al.).

These attempts at concentrating the objects have presented other problems. For example, previous attempts at filtration and/or concentration have effected recoverability and viability as a result of the packing of the objects against the filter. Centrifugation is inefficient when the cell suspension is dilute, and a substantial loss of cells often results. In addition, centrifugation requires large receptacles, e.g., 50 ml tubes, which subsequently needed decanting to eliminate the excess liquid. Also, when very few cells are present in a large volume, recovery of any cells by centrifugation may be impossible or impractical. HGMS requires multiple steps to first hold or capture the objects in a matrix and a then retrieve the captured objects. Also these separation techniques have proved detrimental to the viability of the objects.

In addition, these techniques, including tangential filtration systems, have failed to address the need for a walk-away system which could be integrated into existing flow cytometers or provided as a stand-alone device to quickly recover viable objects.

Thus, there has been a need for a system for separating objects from at least a portion of the fluid in which the objects are suspended, which could be used to concentrate the objects and which would eliminate the problems and limitations associated with the prior techniques discussed above, most significant of the problems being associated with the recoverability and viability of the sorted objects. In addition, there has been a need for a system which could be integrated into existing flow cytometers or provided as a stand alone system. Also, there has been a need for such a system which would provide walk-away operation.

### SUMMARY OF THE INVENTION

In contrast to the prior techniques discussed above, it has been found that a system, including an apparatus and method, particularly suited for use to separate objects such as cells, particles and the like, from at least a portion of a fluid in which they are suspended, while providing acceptable levels of recoverability and viability can be constructed in accordance with the present invention. In addition, the system of the present invention can be used either integrally or independently with existing sorting devices while providing a walk-away system to, for example, concentrate the objects.

The apparatus of the present invention for sorting and separating objects such as cells, particles and the like from a fluid in which they are contained or otherwise suspended, includes source means for supplying a fluid with objects to be separated suspended therein, concentrator means including an upper chamber, a lower chamber through which the fluid with the objects suspended therein may pass along a flow path, collection means positioned within the chamber means between the upper chamber and the lower chamber along the flow path for retaining at least a portion of the objects therein, and circulating means for creating a pressure difference between the upper chamber and the lower chamber whereby the fluid circulates through the concentrator means along the flow path through the collection means to separate at least a portion of the objects from the fluid.

In the preferred embodiment of the apparatus, the concentrator means is adapted to include a filter membrane positioned along the flow path of the fluid by filtering at least a portion of the objects from the fluid, and the filter membrane collects the objects thereon. In addition, the circulating means is adapted to include at least one pump and a valve so that when the valve is in a first position a pressure difference is created between the upper chamber and the lower chamber. Also, the circulating means may include a pressure pump supplying air to the upper chamber of the collection means. The apparatus further includes waste containment means interconnected with the concentrator means for holding the sheath fluid after the objects have been separated therefrom.

In an alternative embodiment, the circulating means includes a vacuum pump for creating a vacuum in the lower chamber of the collection means.

The method of the present invention for separating objects such as cells, particles and the like from at least a portion of a fluid in which such objects are suspended, includes the steps of providing the fluid with the objects suspended therein to a concentrator assembly, creating a pressure difference across a collection means contained within the concentrator assembly, circulating the fluid through the concentrator assembly and through the collection means, and collecting at least a portion of the objects on said collection means.

In the preferred embodiment, the method further includes the step of drawing off a portion of the fluid from the concentrator assembly, the step of monitoring and controlling the level of the fluid in the concentrator assembly, the step of passing the fluid through the concentrator assembly perpendicular to a first side of the collection means and the step of providing a positive pressure difference to the first side of the concentrator assembly so that the portion of the fluid is forced through the collection means to a holding member.

In an alternative embodiment, the method incudes the step of providing a negative pressure difference to a second side of the concentrator assembly so that the portion of the fluid is drawn through the collection means to a holding member. In addition.

The concentrator of the present invention for separating objects such as cells, particles and the like from a fluid in which they are contained or otherwise suspended, includes a vessel having an upper chamber, a lower chamber and a flow path along which the fluid with the objects suspended therein may flow, collection means positioned within the chamber means between the upper chamber and the lower chamber along the flow path for retaining at least a portion of the objects and the collection means including concentrator means for filtering at least a portion of the objects from the fluid, and circulating means for creating a pressure difference between the upper chamber and the lower chamber whereby the fluid circulates through the vessel along the flow path through the collection means to filter at least a portion of the objects from the fluid.

In the preferred embodiment of the concentrator, the collection means is adapted to include a filter membrane positioned along the flow path of the fluid. In addition, the circulating means is adapted to force the fluid through the filter membrane. Also, the circulating means is adapted to include at least one pump and a valve so that when the valve is in a first position pressure is provided to the upper chamber. Further, the concentrator includes waste containment means interconnected with the vessel for holding the sheath fluid after the objects have been separated therefrom.

In an alternative embodiment of the concentrator, the circulating means includes a vacuum pump for creating a vacuum in the lower chamber of the collection means.

The method of the present invention for collecting objects such as cells, particles and the like suspended in a fluid on a membrane, includes the steps of providing the fluid with the objects suspended therein to a concentrator assembly, creating a pressure difference across a collection means contained within the concentrator assembly, circulating the fluid through the concentrator assembly, and collecting at least a portion of the objects on the collection means.

The apparatus of the present invention for collecting objects such as cells, particles and the like suspended or otherwise contained in a fluid on a membrane, includes a vessel having an upper chamber, a lower chamber and a flow path along which the fluid with the objects suspended therein may flow, collection means positioned within the chamber means between the upper chamber and the lower chamber along the flow path for retaining at least a portion of the objects and the collection means including a membrane for collecting at least a portion of the objects from the fluid thereon, and circulating means for creating a pressure difference between the upper chamber and the lower chamber whereby the fluid circulates through the vessel along the flow path so that at least a portion of the objects are collected on the membrane.

### BRIEF DESCRIPTION OF THE DRAWINGS

The various features, objects, benefits, and advantages of the present invention will become more apparent upon reading the following detailed description of the preferred embodiments along with the appended claims in conjunction with the drawings, wherein like reference numerals identify corresponding components, and:
Figure 1 is a schematic representation of the system of the present invention;
Figure 2 is an enlarged, exploded perspective view of the of the concentrator assembly of the system illustrated in Figure 1, with Figure 2A illustrating various alternative embodiments for the insert illustrated in Figure 2;
Figure 3 is a cross-sectional view of the concentrator assembly illustrated in Figure 2;
Figure 4 is a cross-sectional view of the concentrator assembly illustrated in Figure 2 showing the separation of objects and the like from the fluid;
Figure 5 is a cross-sectional view of the concentrator assembly similar to Figure 4 after the fluid stream has been exhausted;
Figure 6 is a cross-sectional view of the concentrator assembly similar to Figure 5 after the remaining sheath fluid has been removed from the concentrator assembly;
Figure 7 is a logic flow diagram depicting the various steps for filtering or otherwise collecting the objects and the like of the system shown in Figure 1, and Figure 7A is a logic flow diagram depicting the various steps for filtering or otherwise collecting the objects and the like of an alternative embodiment of the system of the present invention; and
Figure 8 is a schematic representation of the control module of the system of the present invention.

### DETAILED DESCRIPTION OF THE PREFERRED EMBODIMENTS

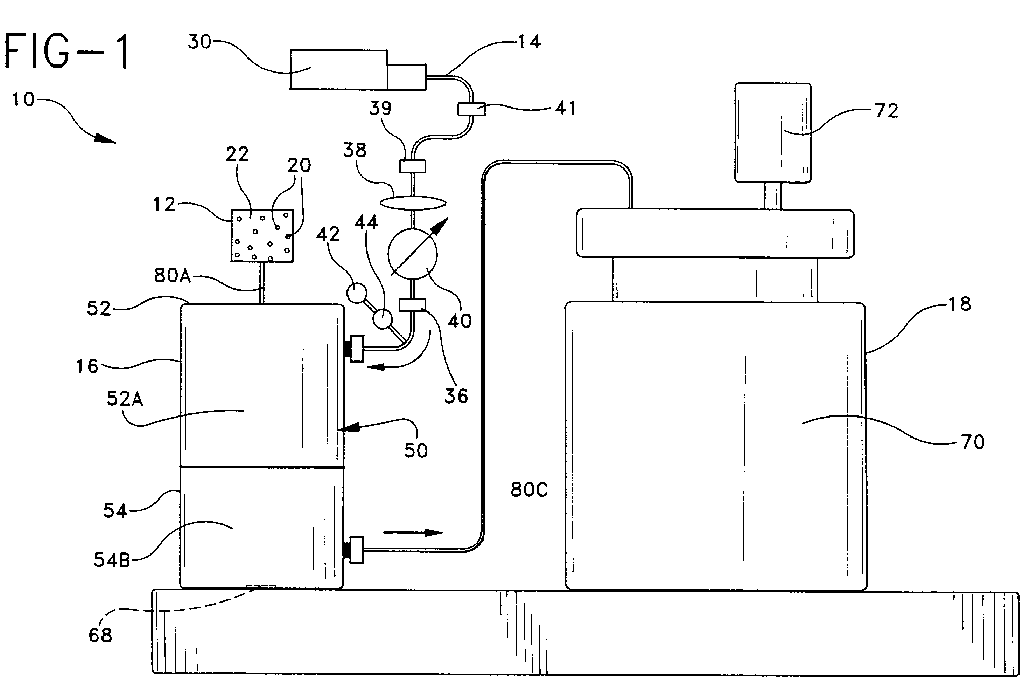

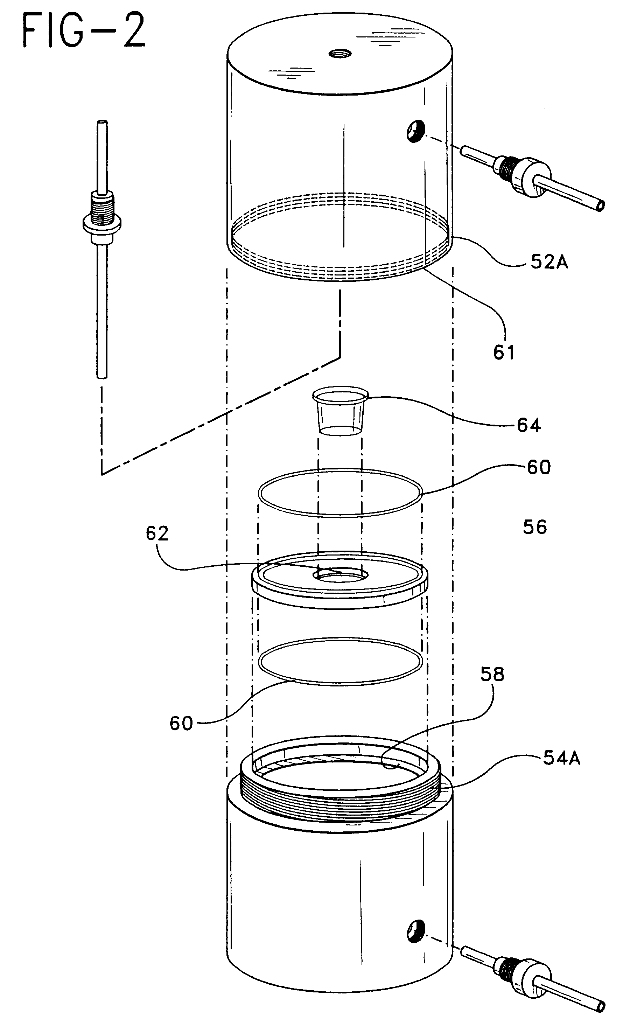

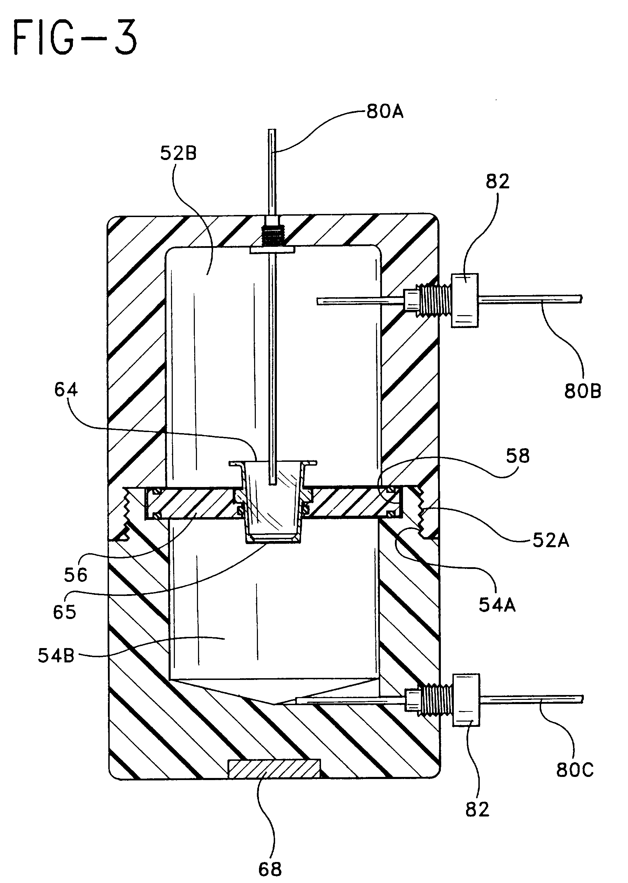

The system of the present invention is illustrated in Figures 1-8 and includes an apparatus and a method for filtering, collecting or otherwise separating objects, such as cells, particles and the like, suspended in a fluid. In this way, the apparatus and method can be used to, for example, filter, collect or separate the objects from the fluid. The system is schematically illustrated in Figure 1 and generally designated as 10.

Referring to Figure 1, the system 10 includes a source 12 of objects, a pressure control assembly 14, a concentrator assembly 16 and a waste containment assembly 18. As will be recognized by those skilled in the art, the source 12 of the objects 20 suspended in a fluid 22 may include a conventional flow cytometer of the type disclosed in U.S. Patent Nos. 4,844,610 (North, Jr.), 5,040,890 (North, Jr.), and preferably, 5,030,002 (North, Jr.), the disclosures of which are hereby incorporated by reference in their entirety as though fully set forth herein.

Typically, such flow cytometers include the capability of sorting objects and preferably include a pressure pump for forcing a sheath fluid through a flow cell in which objects contained in the fluid can be analyzed and objects of interest separated or otherwise sorted therefrom by, preferably, a catcher tube situated in the flow of object containing sheath fluid such as those commercially available from Becton, Dickinson and Company, through its Immunocytometry Systems Division located in San Jose, California and known as the FACSort™ flow cytometer. In this way, the concentrator assembly can be incorporated into such flow cytometers as a integral system to sort and concentrate the objects of interest during operation of the flow cytometer or operated independently as a separate assembly after the objects have been sorted by the flow cytometer.

In addition, the pressure control assembly 14 includes a pump 30, a one way valve 36, a filter 38, a restrictor 39, a flow regulator valve 40, and a valve 41, with the valve 41 preferably being a solenoid valve to ensure that no pressurized air enters the concentrator assembly 16 when the concentrator is inoperative or otherwise off. In the preferred embodiment, the pump in the flow cytometer can be utilized to supply pressurized air for the pressure control assembly, as well as to supply air to the sheath fluid pressure system and sample pressure system of the flow cytometer. In this way, if the concentrator assembly 16 is connected directly with the source 12 of the objects, the source can continue to sort until the desired number of objects are sorted, or the system runs out of sample, eliminating the prior limitation on the time constraints for continuous operation of the flow cytometer, which prior hereto was normally about 9 minutes before it becomes necessary to change over from one culture tube to another, which typically are 50 ml tubes.

The pressure supplied to the concentrator assembly 16 through the pressure control assembly 14 is regulated accurately by the restrictor 39 and the flow regulator valve 40, with the valve 40 preferably including an electromagnetic valve. In this way, the restrictor 39 provides limited air consumption during operation from 0 to 400 cc/min and the regulator valve 40 adjusts the required air volume to maintain a constant liquid level inside the concentrator assembly 16. The pump 30 provides 10 to 12 psi at a volume of 1500 ml/minute, with the air-flow being regulated by changing the voltage over the valve 40 using a potentiometer and an on/off switch, with the pressure on the module to press the sheath fluid through the membrane of the collector preferably lying in the range of 0.5 to 1 psi. In addition, the one-way valve 36 prevents, in the case of overflow from the concentrator assembly 16, liquid from entering the pressure control assembly 14, and an in-line filter 38, preferably 0.2µm, is provided to prevent passage of biological material into the concentrator assembly 16. This ensures a sterile and stable air flow to the concentrator assembly 16 for correct regulation of the air pressure during the concentration phase. Also, a bleed valve 42, interconnected with a filter 44 to prevent contamination, may be adjusted to permit a quick evacuation of the pressurized air when the concentration phase is stopped, which as a secondary function, allows excess air to bleed off and bring the valve 40 into an operative range.

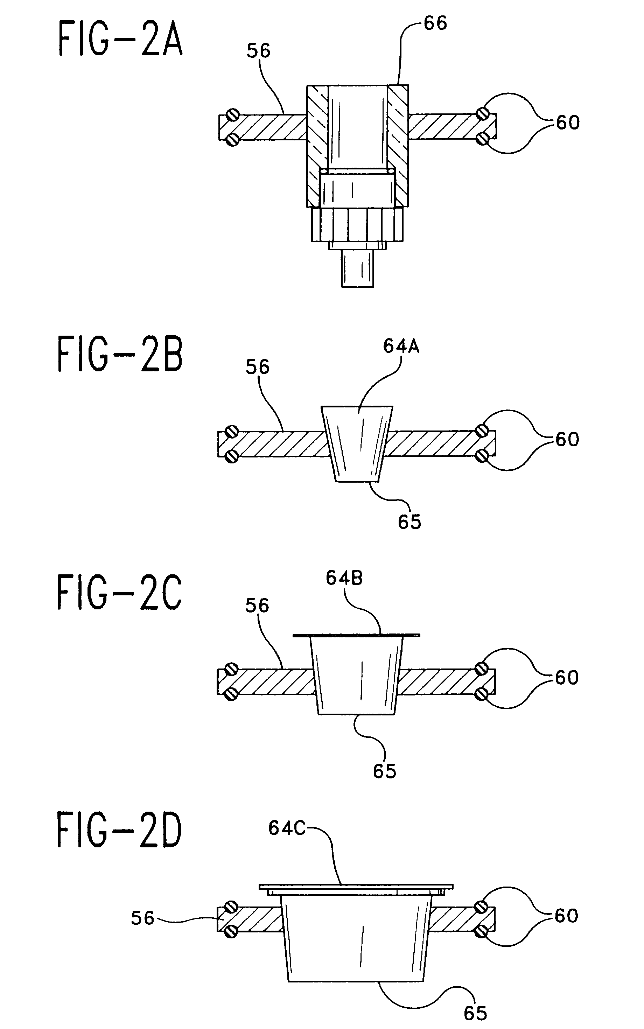

As illustrated in Figure 1, and in greater detail in Figures 2-6, the concentrator assembly 16 includes a vessel 50 having an inner chamber, an upper portion 52 and a lower portion 54. In the preferred embodiment the upper portion 52 includes a plurality of grooves 52A and the lower portion includes a plurality of corresponding threads 54A so that the portions are sealingly engageable with one another. In addition, the assembly 16 includes a holder disk 56 which may be nestingly situated in a retaining groove 58 within the vessel to separate the inner chamber of the vessel 50 into an upper chamber 52B and a lower chamber 54B. In addition, a pair of O-ring seals 60 are situated on each side of the holder disk 56 to seal the peripheral edge thereof. In this way, the lower edge 61 of the upper portion 54 sealingly retains the holder disk and O-rings in the groove 58.

An opening 62 is provided in the holder disk for accommodating an insert 64 in which the objects may be filtered and/or collected. The particular insert is not essential to the present invention, and may, for example as illustrated in Figure 2A, include different filters such as a Millipore™ filter 66, Falcon™ culture cups 64A, 64B and 64C for cloning and the like. The particular insert is a matter of choice depending upon the objects to be collected and the desired analysis, study, test or process to be subsequently performed in connection with the objects. For example, it has been found that Falcon™ culture cups 64A, 64B, 64C having 1 Micron pore size membrane filters can be obtained in 0.45µm, 3µM, and 8µM sizes, which can be coated with biological media such as, for example, a Phosphate Buffered Solution with 0.5% Bovine Calf Serum concentration. In addition, the Millipore™ filter 66 may be used to collect the objects. Also, the concentrator vessel 50 can be decontaminated using Methanol rinsing. As is well known in the art, the membranes in the inserts can be modified and/or selected so that the objects either adhere to the membrane or are prevented from adhering to the membrane depending upon the desired analysis, study or processing to be subsequently performed. In addition, a magnet 68 is provided in the bottom of the vessel to ensure correct fixation in the system.

The waste containment assembly 18 includes a waste tank 70 in which the remaining sheath fluid is collected for disposal, with the contaminated air exhaust filtered by a filter 72, preferably having a large area of, for example, 0.22µm, to prevent escape of biological material from the waste tank. In addition, to provide sufficient volume, the waste tank is preferably a one liter or larger tank, which allows for 4 hours of concentration.

Fluid 22 and air under pressure is supplied to and circulated through the various assemblies 12, 14, 16 and 18 through various lengths of tubing 80 along a flow path thereof, with the integrity of the system protected by self-sealing quick-fit connectors 82. The particular type of tubing is not essential to the present invention and may include, for example, plastic, glass or metal tubing or any combination thereof.

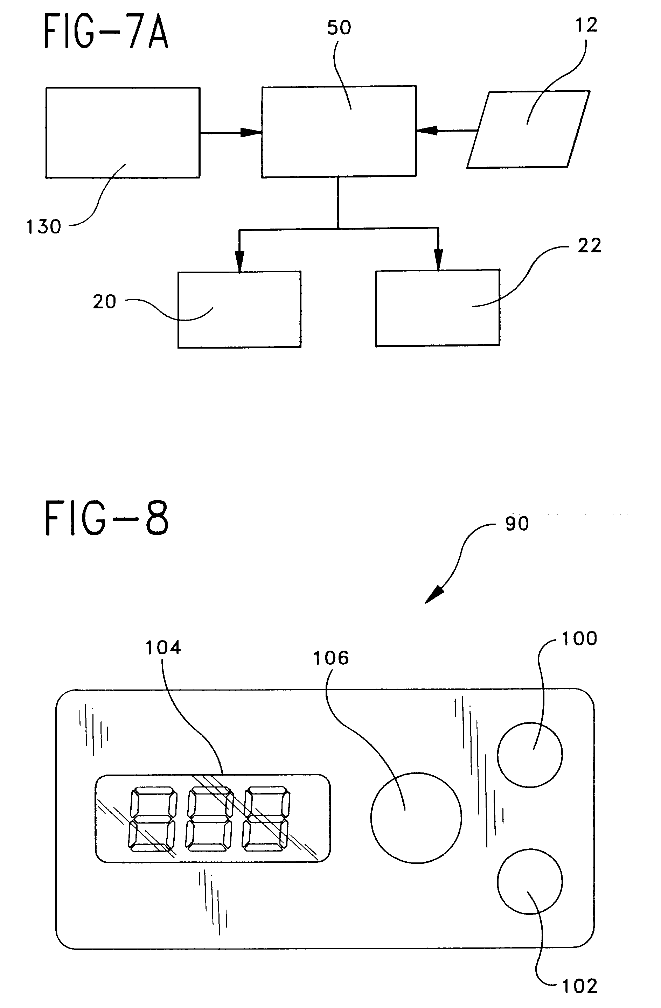

Although the preferred embodiment of the system of the present invention, including the apparatus and method, has been described in detail in connection with a positive pressure being provided in the upper chamber 52B, it should also be apprecaited that a vacuum pump 130 may be interconnected with the lower chamber 54B in the alternative embodiment illustrated in Figure 7A, wherein like reference numbers identify corresponding components, or the vacuum may be applied to the lower chamber 54B in combination with the pressurized air supplied to the upper chamber 52B to filter or collect the objects on the membrane, especially, in situations where it is desired that the objects adhere to the membrane.

The materials and components used for constructing the various assemblies are also not essential to the present invention and may be made from a variety of materials and selected from a number of sources as is well known to those skilled in the art. Normally, manufacturers of the present system will select the various materials and components, based upon price, availability and application, i.e., whether the device will be integrated into a flow cytometer or function as a stand alone item.

For example, the various lengths of tubing 80 may be made from a plastic material having the properties of biocompatibility, flexibility, and durability such as polymers, including polyvinylchloride, polyolefin, silicon etc.

In addition, the particular shape or configuration of the vessel 50 is not essential to the present invention, which in the preferred embodiment is a optically transparent material such as for example a closed end cylinder of polycarbonate, which is transparent, resistant to specific chemicals commonly used for sterilization such as 70% alcohol, and heat resistant up to 120° Celsius.

### Operation and Use

The operation of the system 10 of the present invention illustrated in Figure 1 will now be explained with reference to the flow diagram shown in Figure 7 and the control module 90 shown in Figure 8.

The fluid 22 with the objects 20 of interested to be filtered, collected or separated suspended therein is supplied to the concentrator assembly 16 preferably directly from the flow cytometer or source 12 through the sort input needle.

With reference to Figure 8, when the concentrator "ON" switch 100 is activated, the system is switched into the concentration phase, and the pressure "ON" switch 102 activates the pressurization of the concentrator assembly 16, and the air flow indicator 104 indicates the flow of air, injected into the vessel 50. In this way, the user can adjust the flow by adjusting the pressure adjustment 106 to get a constant liquid level in the concentrator assembly.

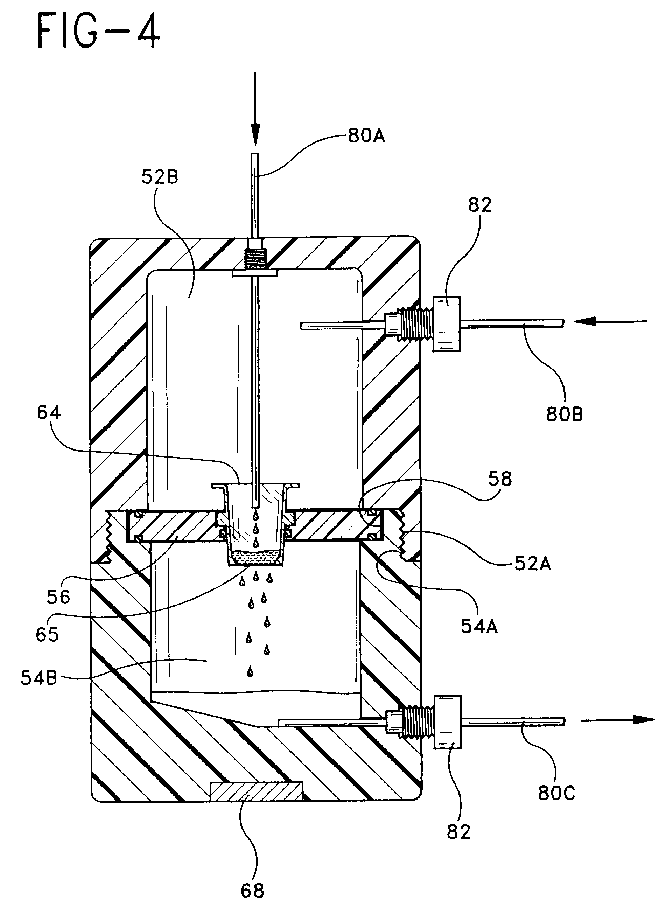

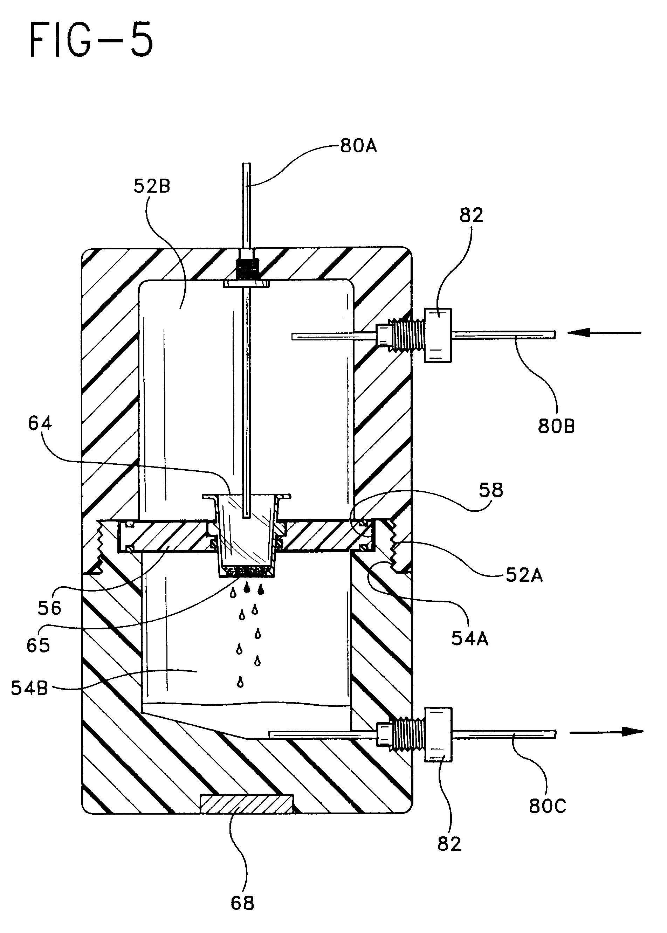

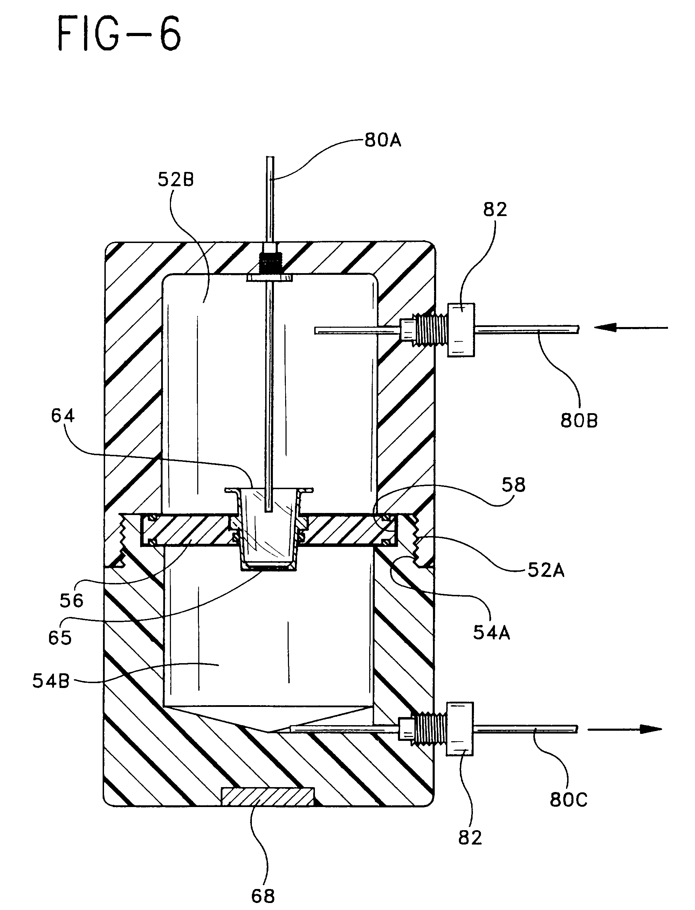

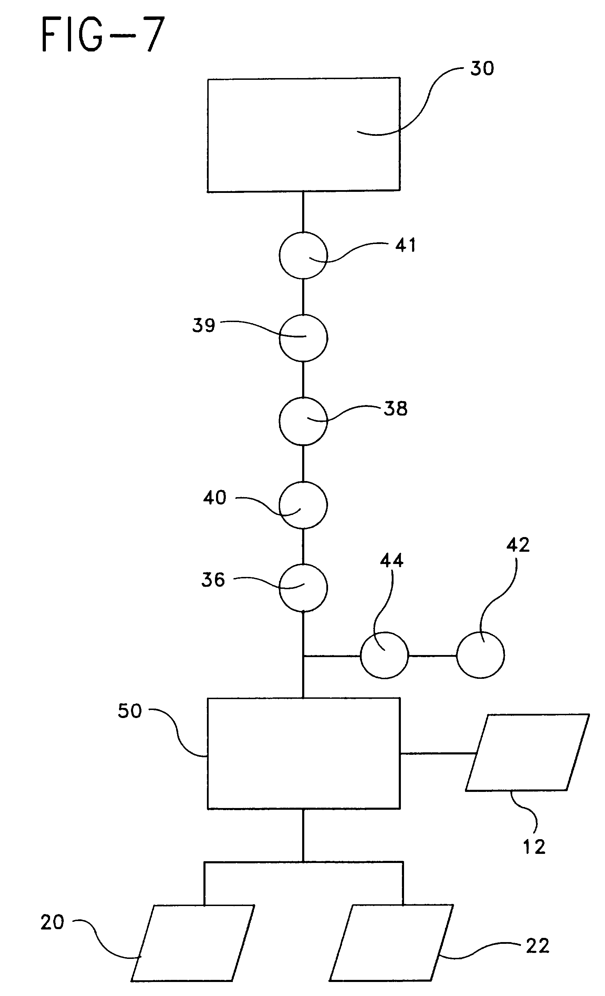

Accordingly, the fluid 22 containing the objects 20 suspended therein is supplied to the upper chamber 52A of the vessel 50 through a length of tubing 80A, or directly from the sort input needle, and air is supplied to the upper chamber 52A through the length of tubing 80B as illustrated in Figure 1, and in greater detail in Figure 4. As sorting continues, the objects are filtered by the membrane 65 of the insert 64, as the fluid is forced through the membrane by the pressure difference between the upper chamber 52B and the lower chamber 54B. In addition, the pressure difference forces the remaining fluid from the lower chamber of the vessel 50 through a length of tubing 80C into the waste tank 70. Upon completion of the sorting mode, or the source is otherwise exhausted, air continues to be supplied to the upper chamber to maintain the pressure difference to complete collection of the objects in the insert 64 as illustrated in Figure 5, and to complete removal of any remaining fluid in the lower chamber as illustrated in Figure 6.

Accordingly, the recoverability of objects onto the insert provides opportunities to use flow cytometers for cell verification, rare event cell sorting, cell culturing, FISH and PCR, with recoveries in excess of 80% of the sorted objects having been achieved.

While preferred embodiments of the present invention have been described so as to enable one skilled in the art to practice the device of the present invention, it is to be understood that variations and modifications may be employed without departing from the concept and intent of the present invention as defined in the following claims. The preceding description is intended to be exemplary and should not be used to limit the scope of the invention. The scope of the invention should be determined only by reference to the following claims.

## Claims

1. An apparatus for sorting and separating objects such as cells, particles and the like from a fluid in which they are contained or otherwise suspended, comprising:
source means for supplying a fluid with objects to be separated suspended therein;
concentrator means including an upper chamber, a lower chamber through which said fluid with said objects suspended therein may pass along a flow path;
collection means positioned within said chamber means between said upper chamber and said lower chamber along said flow path for retaining at least a portion of the objects therein; and
circulating means for creating a pressure difference between said upper chamber and said lower chamber whereby said fluid circulates through said concentrator means along said flow path through said collection means to separate at least a portion of said objects from said fluid.

2. The apparatus defined in claim 1, wherein said concentrator means is adapted to include a filter membrane positioned along the flow path of said fluid to filter at least a portion of said objects from said fluid, and said circulating means is adapted to include at least one pump and a valve so that when said valve is in a first position a pressure difference is created between said upper chamber and said lower chamber.

3. The apparatus defined in claim 1, wherein said circulating means includes a pressure pump supplying air to the upper chamber of said collection means or a vacuum pump for creating a vacuum in the lower chamber of said collection means.

4. The apparatus defined in claim 1, further comprising waste containment means interconnected with said concentrator means for holding said sheath fluid after said objects have been separated therefrom.

5. A method for separating objects such as cells, particles and the like from at least a portion of a fluid in which such objects are suspended, comprising the steps of:
providing said fluid with said objects suspended therein to a concentrator assembly;
creating a pressure difference across a collection means contained within said concentrator assembly;
circulating said fluid through said concentrator assembly; and
collecting at least a portion of said objects on said collection means.

6. The method defined in claim 5, further comprising the steps of drawing off a portion of said fluid from said concentrator assembly and monitoring and controlling the level of said fluid in said concentrator assembly.

7. The method defined in claim 6, further comprising the step of passing said fluid through said concentrator assembly perpendicular to a first side of said collection means or the step of providing a negative pressure difference to a second side of said concentrator assembly so that said portion of said fluid is drawn through the collection means to a holding member.

8. The method defined in claim 7, further comprising the step of providing a positive pressure difference to said first side of said concentrator assembly so that said portion of said fluid is forced through the collection means to a holding member.

9. A concentrator for separating objects such as cells, particles and the like from a fluid in which they are contained or otherwise suspended, comprising:
a vessel having an upper chamber, a lower chamber and a flow path along which the fluid with said objects suspended therein may flow;
collection means positioned within said chamber means between said upper chamber and said lower chamber along said flow path for retaining at least a portion of the objects and said collection means including concentrator means for filtering at least a portion of said objects from said fluid; and
circulating means for creating a pressure difference between said upper chamber and said lower chamber whereby said fluid circulates through said vessel along said flow path through said collection means to filter at least a portion of said objects from said fluid.

10. A method for collecting objects such as cells, particles and the like suspended in a fluid on a membrane, comprising the steps of:
providing said fluid with said objects suspended therein to a concentrator assembly;
creating a pressure difference across a collection means contained within said concentrator assembly;
circulating said fluid through said concentrator assembly; and
collecting at least a portion of said objects on said collection means.

11. An apparatus for collecting objects such as cells, particles and the like suspended or otherwise contained in a fluid on a membrane, comprising:
a vessel having an upper chamber, a lower chamber and a flow path along which the fluid with said objects suspended therein may flow;
collection means positioned within said chamber means between said upper chamber and said lower chamber along said flow path for retaining at least a portion of the objects and said collection means including a membrane for collecting at least a portion of said objects from said fluid thereon; and
circulating means for creating a pressure difference between said upper chamber and said lower chamber whereby said fluid circulates through said vessel along said flow path so that at least a portion of said objects are collected on said membrane.
